# EUROPEAN PATENT SPECIFICATION

(11) **EP 3 374 710 B1**
(45) Date of publication and mention of the grant of the patent: **14.09.2022**
(21) Application number: 17775717.6
(22) Date of filing: 21.03.2017
(51) Int. Cl.: F25D 23/02, E05F 15/614, E06B 3/36

(54) **DOOR DRIVING SYSTEM AND REFRIGERATOR INCLUDING THE SAME**
TÜRANTRIEBSSYSTEM UND KÜHLSCHRANK DAMIT
SYSTÈME D'ENTRAINEMENT DE PORTE ET RÉFRIGÉRATEUR LE COMPRENANT

(30) Priority: 30.03.2016 JP 2016068812; 13.09.2016 KR 20160118113
(43) Date of publication of application: 19.09.2018
(73) Proprietor: Samsung Electronics Co., Ltd., Suwon-si, Gyeonggi-do 16677 (KR)
(72) Inventor: YASAKA, Yoshio, Yokohama-shi, Kanagawa 230-0027 (JP); KAN, Kentaro, Yokohama-shi, Kanagawa 230-0027 (JP)
(74) Representative: Walaski, Jan Filip
(86) International application number: PCT/KR2017/003018
(87) International publication number: WO 2017/171292

(56) References cited:
- GB-A- 872 577
- JP-A- 2005 326 044
- JP-A- 2015 086 524
- JP-A- 2015 086 524
- JP-A- 2016 011 797
- JP-B2- 3 442 276
- JP-B2- H0 823 249
- JP-B2- H0 823 249

## Description

### Technical Field

The present invention relates to a refrigerator including a door driving system to be used to open or close a door of the refrigerator.

### Background Art

As disclosed in Japanese patent application publication No. 2002-257466, there is a device for automatically opening a door of a refrigerator, in which when a switch is manipulated in a state in which the door is closed, a cam installed at a housing is rotated by power generated by a motor, protrudes to a side of the door, and thus pushes the door, thereby automatically opening the door.

Furthermore, there may be a door driving system in which a plurality of gears are interposed between an output shaft of a motor and a hinge of a door to automatically open or close the door, and are rotated by power generated by the motor to transmit the power of the motor to the door, thereby opening or closing the door.

However, in the above structure, if the plurality of gears are engaged with each other when the door which is at a closed position is to be opened, a torque needed to overcome a magnetic force between the door and a housing increases and thus the size of the motor should be increased accordingly.

JPH08-23249 discloses a door opening and closing mechanism having a clutch for connecting a latch releasing mechanism and a door opening and closing mechanism.

### Disclosure of Invention

### Technical Problem

Therefore, it is an aspect of the present invention to provide a refrigerator including a door driving system , which is capable of reducing a torque needed to remove a magnetic force between a door and a housing.

Additional aspects of the invention will be set forth in the description which follows, whereby the invention is only defined by the appended claims.

### Solution to Problem

In accordance with the present invention, there is provided a refrigerator according to claim 1. Optional features are set out in the dependent claims.

### Advantageous Effects of Invention

According to the present invention, it is possible to reduce the torque required to remove the magnetism of the door and the case, thereby miniaturizing the motor and miniaturizing the entire device.

### Brief Description of Drawings

FIG. 1 is a schematic view showing an installation state of a door driving system of the refrigerator.
FIG. 2 is a perspective view of a door driving system of the refrigerator.
FIG. 3 is a plan view of a door driving system of the refrigerator.
FIG. 4 is a plan view showing the operation of an auxiliary device in a door driving system of the refrigerator.
FIG. 5 is a perspective view of the configuration of the planetary gear unit.
FIG. 6 is an exploded perspective view of the planetary gear unit.
FIG. 7A, 7B and 7C are plan views showing the operation of the clutch device in the refrigerator.

### Best Mode for Carrying out the Invention

Hereinafter, a door driving system of a refrigerator in accordance with an embodiment of the present invention will be described with reference to the accompanying drawings.

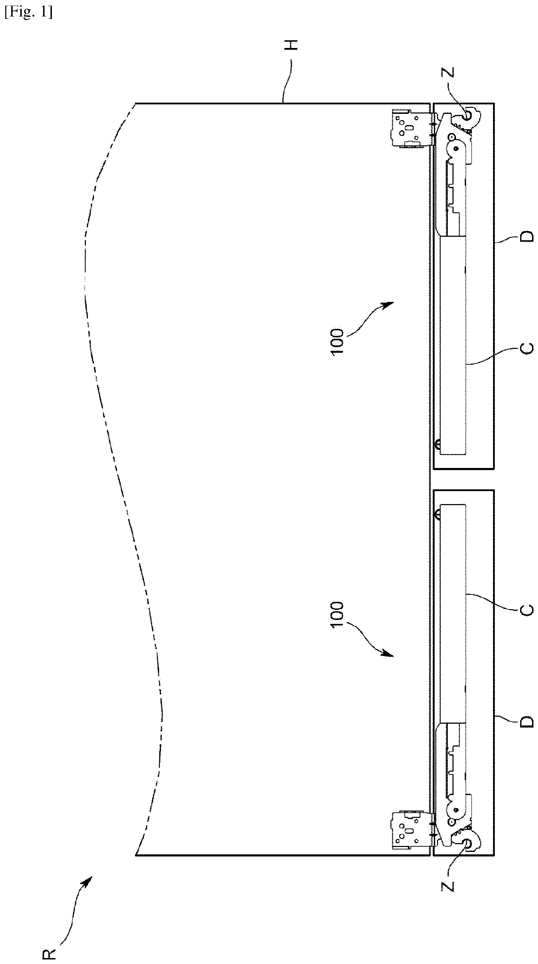

As illustrated in FIG. 1, a refrigerator R to which a door driving system in accordance with an embodiment of the present invention is applied includes a housing H having an open front surface, and two doors D installed at left and right sides of the front of the housing H to open or close an opening of the housing H. The two doors D are rotatably supported by hinge Z, respectively.

Door driving systems 100 of the refrigerator are configured to individually open or close the two doors D of the refrigerator R, and installed to be respectively accommodated in casings C provided on the two doors D.

In the present embodiment, the door driving systems 100 of the refrigerator are bisymmetrical. Thus, the door driving system 100, which is configured to open or close the right door D will be described with reference to FIG. 1 below.

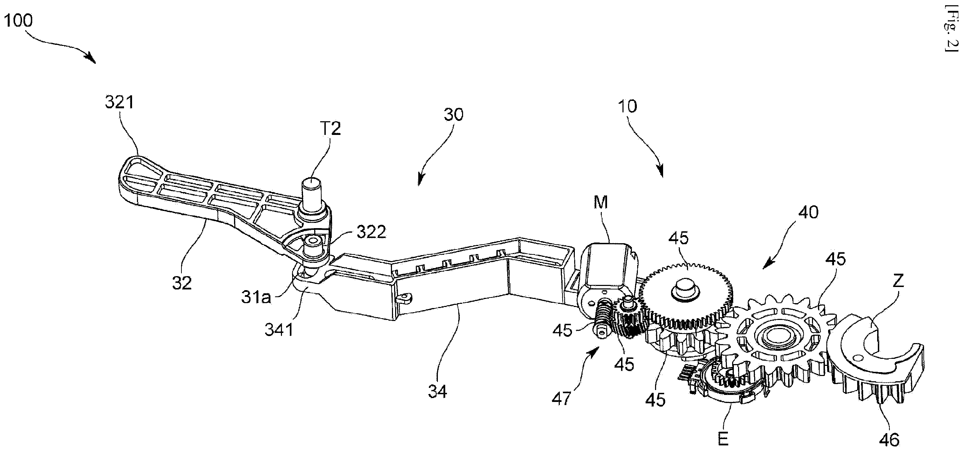

As illustrated in FIGS. 2 to 4, the door driving system 100 includes a driving device 10 which generates power for opening or closing the door D and transfers the power to the door D, and an auxiliary device 30 which assists in opening the door D which is at a closed position.

First, a structure of the driving device 10 will be described. As illustrated in FIGS. 2 to 4, the driving device 10 includes a motor M which generates power, and a power transfer device 40 which transfers the power generated by the motor M to the door D via the hinge Z.

The motor M is installed to be accommodated in the casing C on the door D. An output shaft of the motor M makes normal rotation or reverse rotation according to a control signal received from a controller (not shown).

In the present embodiment, the motor M is configured to open or close the door D according to a predetermined speed pattern on the basis of the control signal received from the controller. More specifically, the controller receives a position signal representing the position of the door D from an encoder E, and generates the control signal on the basis of the position signal.

The power transfer device 40 is arranged between the motor M and the hinge Z, includes a plurality of driving gears 45 rotated linked with the motor M and a missing-teeth gear 46 installed at the hinge Z, and is configured to transfer power of the motor M to the hinge of the door D only through rotation of the gears 45 and 46. Furthermore, in the present embodiment, one of the plurality of driving gears 45 may be a worm gear 47 (including a worm and a worm wheel) connected to the output shaft of the motor M.

The auxiliary device 30 applied to a door driving system of the refrigerator in accordance with an embodiment of the present invention will be described below.

The auxiliary device 30 generates auxiliary power for opening the door D. In the present embodiment, the auxiliary device 30 is installed to be accommodated in the casing C on the door D.

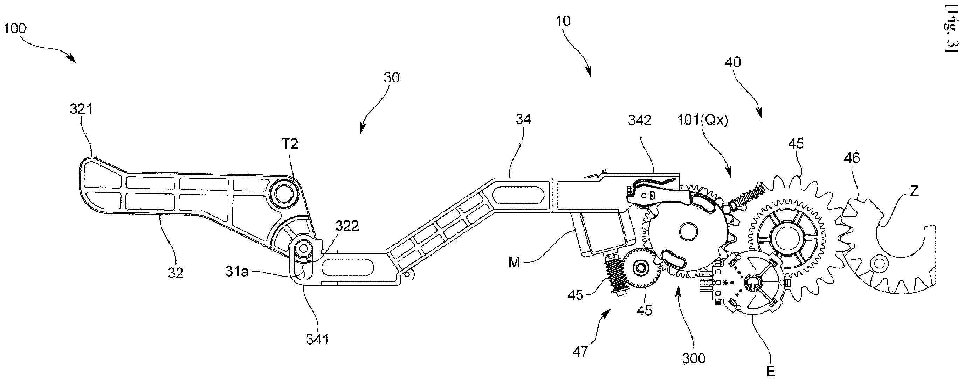

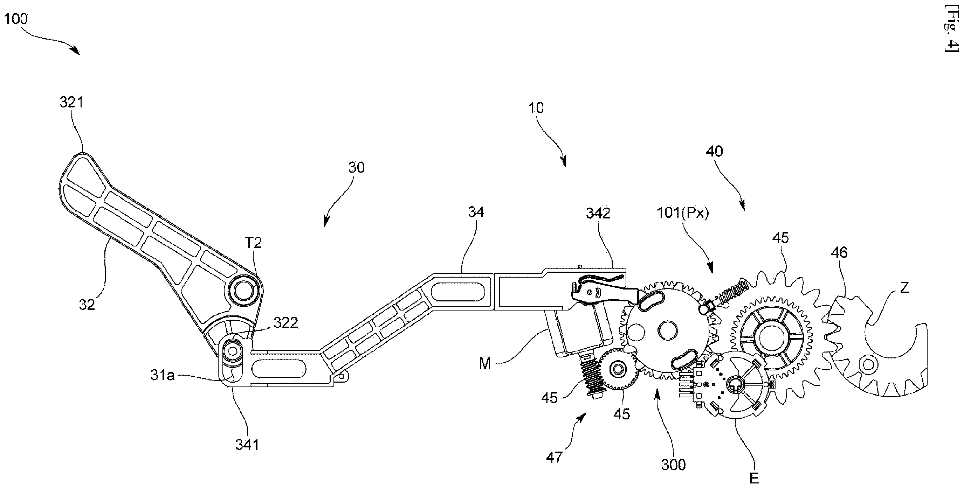

As illustrated in FIGS. 3 and 4, the auxiliary device 30 is installed to be slidable, and includes a slide member 34 which receives the power of the motor M and is slid by the power, and an auxiliary pressurizing member 32 which is rotatable around an axis of rotation T2 while being linked with sliding of the slide member 34. The auxiliary pressurizing member 32 comes in contact with the housing H while being rotated around the axis of rotation T2 to supply the auxiliary power to the door D.

The slide member 34 extends to be long and is configured to be slidable in a direction in which it extends. The auxiliary pressurizing member 32 is installed at one end part 341 of the slide member 34, and power is supplied to another end part 342 of the slide member 34 from the power transfer device 40.

The auxiliary pressurizing member 32 includes a passing-through member 322 installed to pass through a passing-through hole 31a formed in the end part 341 of the slide member 34. The auxiliary pressurizing member 32 may be installed in the slide member 34 by inserting the passing-through member 322 into the passing-through hole 31a.

The auxiliary pressurizing member 32 includes a collision part 321 which collides against the front surface of the housing H as the auxiliary pressurizing member 32 is rotated about the axis of rotation T2.

As illustrated in FIG. 4, due to the above structure, as the slide member 34 slides toward the end part 341 from the other end part 342, the auxiliary pressurizing member 32 is rotated about the axis of rotation T2. The passing-through member 322 may serve as a point of application of force and the collision part 321 serves as a point of action. Thus, the auxiliary power transferred via the collision part 321 acts on the door D. Accordingly, a magnetic force between the door D and the housing H may be overcome.

A clutch device 101 applied to a door driving system will be described below.

As illustrated in FIGS. 3 and 4, the door driving system 100 of the refrigerator in accordance with the present embodiment further includes the clutch device 101 configured to selectively transfer power of the motor M to the hinge Z. That is, the clutch device 101 causes either a power transfer state Px in which the power of the motor M is transferred to the hinge Z or a non-power transfer state Qx in which the power of the motor M is not transferred to the hinge Z to be performed.

When the clutch device 101 is switched to the non-power transfer state Qx and thus the power of the motor M is not transferred to the hinge Z, the auxiliary device 30 generates auxiliary power to move the door D, which is at the closed position, in an opening direction.

As illustrated in FIGS. 3 and 4, the clutch device 101 is interposed between the motor M and the hinge Z, and configured to receive power from the motor M and to be switched to the power transfer state Px or the non-power transfer state Qx only by the power of the motor M. In the present embodiment, a planetary gear unit 300 is used as the clutch device 101.

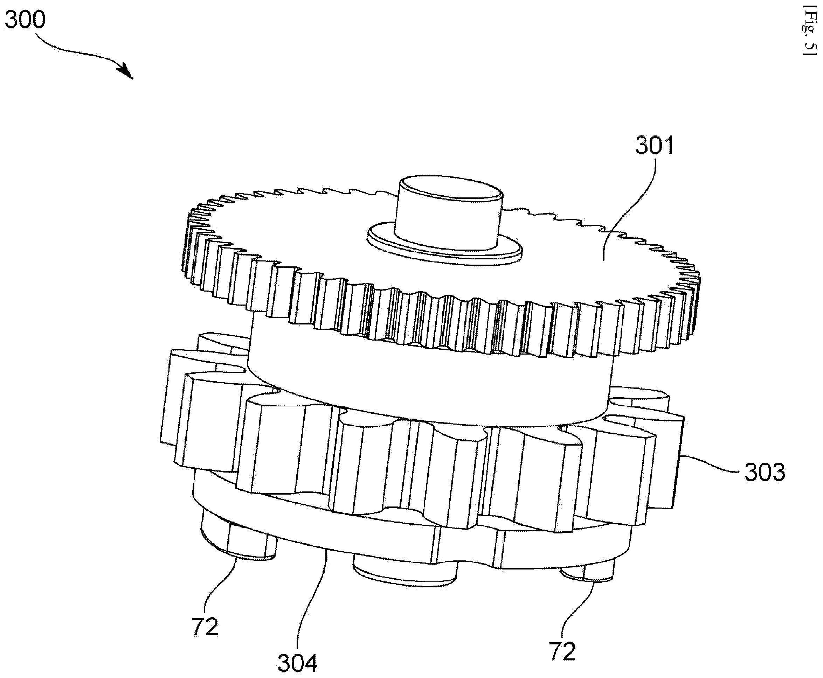

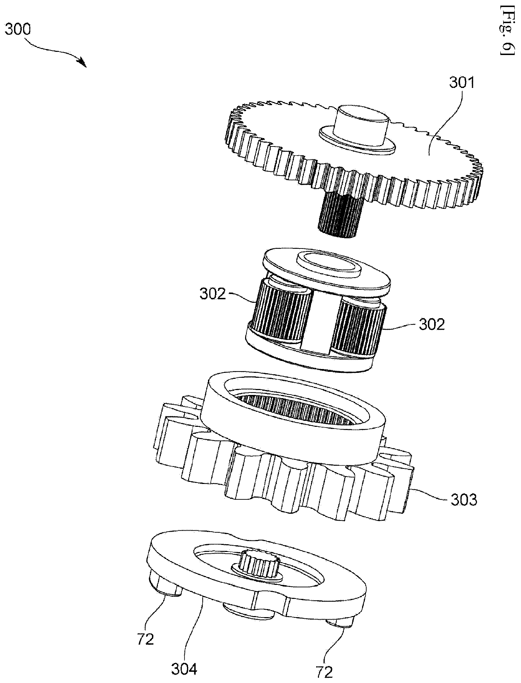

As illustrated in FIGS. 5 and 6, the planetary gear unit 300 includes a sun gear 301 rotated linked with the motor M, a plurality of planetary gears 302 having teeth engaged with those of the sun gear 301, an internal gear 303 having internal teeth engaged with the teeth of the plurality of planetary gears 302 and rotated linked with the door D, and a carrier 304 which supports the plurality of planetary gears 302 to be rotated on axes thereof. Here, the sun gear 301, the plurality of planetary gears 302, and the internal gear 303 are some of the plurality of driving gears 45 which will be described below.

Due to the above structure, when the sun gear 301 is rotated by power of the motor M, the plurality of planetary gears 302 are rotated on the axes thereof or revolve by the rotation of the sun gear 301. When the plurality of planetary gears 302 are rotated on the axes thereof, the internal gear 303 is rotated in a direction opposite to a direction of the rotation of the sun gear 301. When the plurality of planetary gears 302 revolve, the carrier 304 is rotated in the direction of the rotation of the sun gear 301.

More specifically, the carrier 304 is rotated linked with the rotation of the sun gear 301 in a state in which the internal gear 303 is fixed, and the internal gear 303 is rotated linked with the rotation of the sun gear 301 in a state in which the carrier 304 is fixed. That is, the power of the motor M applied to the sun gear 301 is output to the internal gear 303 or the carrier 304.

When one of the internal gear 303 and the carrier 304 is rotated in a state in which the sun gear 301 is fixed, the other is rotated since the sun gear 301 is fixed.

To explain the door driving system of the refrigerator differently, the refrigerator includes a planetary gear unit and at least one drive gear coupling the planetary gear to the motor, and the at least one drive gear and the planetary gear unit cooperate together to transfer the power output by the motor to the hinge to move the hinge and thereby open or close the door, without transferring a turning force generated by the hinge to the motor.

And at least one drive gear coupling the motor to the sun gear, when the hinge generates a turning force, the internal gear is rotated by the turning force with the at least one drive gear preventing the sun gear from rotating, which thereby causes the planetary gear to revolve, and thus the turning force is not transferred to the motor.

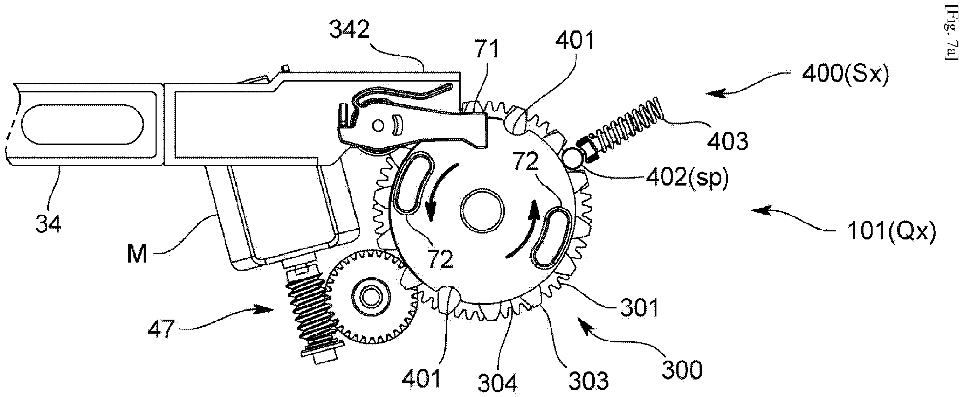

As illustrated in FIGS. 7A to 7C, the clutch device 101 in accordance with the present embodiment includes a locking device 400 which selectively limits rotation of the carrier 304. That is, the locking device 400 causes either a locked state Rx in which the carrier 304 is fixed not to rotate carrier 304 or an unlocked state Sx in which the carrier 304 is not fixed and thus the carrier 304 is rotatable to be performed.

More specifically, the locking device 400 includes dented parts 401 formed in an outer circumference surface of the carrier 304, a locking member 402 configured to be moved to advance or retreat between a locked position rp at which the locking member 402 is wedged in one of the dented parts 401 in the locked state Rx and a withdrawn position sp at which the locking member 402 is separated from the dented part 401 in the unlocked state Sx, and a pressurizing member 403 configured to pressurize the locking member 402 toward the locked position rp from the withdrawn position sp.

The dented parts 401 are provided on a plurality of points (two points in the present embodiment) on the outer circumference surface of the carrier 304 at regular intervals in a circumferential direction. In the present embodiment, the dented parts 401 are formed in an inwardly dented form in the outer circumference surface of the carrier 304.

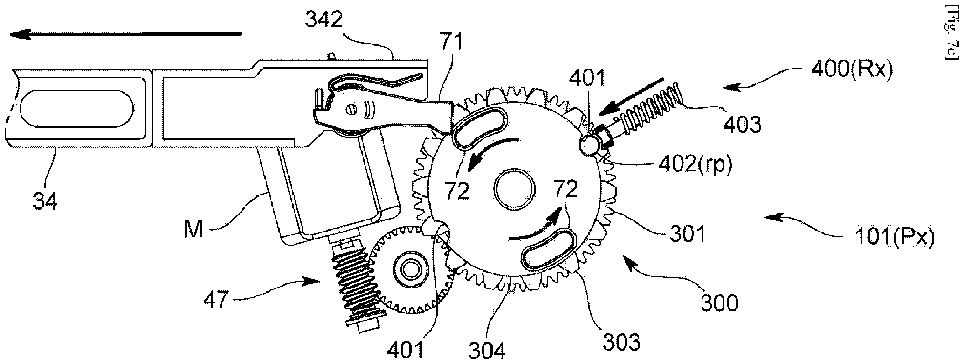

As illustrated in FIG. 7C, when the carrier 304 is rotated to cause one of the dented parts 401 to reach a position corresponding to the locking member 402, the locking member 402 is wedged into the dented part 401 and is then in the locked position rp.

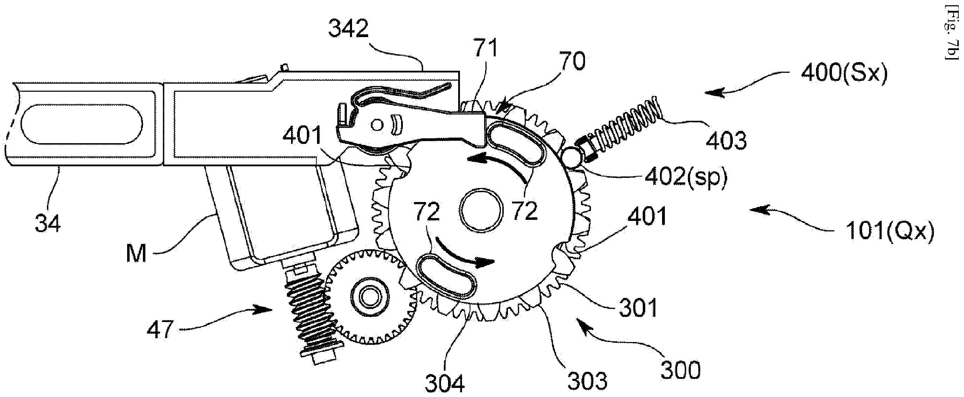

As illustrated in FIGS. 7A and 7B, when any one of the dented parts 401 is not at the position corresponding to the locking member 402, the locking member 402 is not wedged into any one of the dented parts 401. Thus, when the locking member 402 is in contact with a position on the outer circumference surface of the carrier 304 other than the dented parts 401, the locking member 402 is maintained at the withdrawn position sp.

That is, the rotation of the carrier 304 is not interfered with the locking member 402 when the locking member 402 is at the withdrawn position sp, and is limited by the locking member 402 when the locking member 402 is at the locked position rp. The locking member 402 in the present embodiment has a sphere shape but is not limited thereto.

The pressurizing member 403 is formed in the form of a spring having an elastic force or the like, and one end part thereof is fixed onto the casing C. The pressurizing member 403 in accordance with the present embodiment may apply an elastic force to the locking member 402 to overcome pressure applied by the pressurizing member 403 and to be moved from the locked position rp to the withdrawn position sp, when a force applied to the carrier 304 in a direction of rotation is greater than or equal to a predetermined level in a state in which the locking member 402 is at the locked position rp.

As described above, since the locking device 400 is provided, the carrier 304 is not rotated and the internal gear 303 is rotated in the locked state Rx in which the locking member 402 is at the locked position rp, and the internal gear 303 is not rotated and the carrier 304 is rotated in the unlocked state Sx in which the locking member 402 is at the withdrawn position sp.

In the present embodiment, as illustrated in FIG. 7B, a power conversion device 70 is arranged between the power transfer device 40 and the auxiliary device 30 to convert a force acting in a direction of rotation to be transferred by the power transfer device 40 into a force acting in a direction in which the slide member 34 of the auxiliary device 30 slides. More specifically, the power conversion device 70 is arranged between the slide member 34 and the carrier 304 to convert a force acting on the carrier 304 in the direction of rotation into the force acting in the direction in which the slide member 34 slides.

The power conversion device 70 in accordance with the present embodiment is a socalled latch mechanism, and includes rotation parts 72 (two rotation parts 72 in the present embodiment) installed on a bottom surface of the carrier 304 and rotated linked with the carrier 304, and a hook part 71 installed on the other end part 342 of the slide member 34 and selectively engaged with one of the rotation parts 72 according to a direction of rotation of the carrier 304.

More specifically, the carrier 304 is arranged adjacent to the other end part 342 of the slide member 34 and thus one of the rotation parts 72 rotated together with the carrier 304 pressurizes the hook part 71 when the carrier 304 is rotated in a forward direction due to normal rotation of the motor M. When one of the rotation parts 72 pressurizes the hook part 71, power acting in the direction of rotation of the carrier 304 is converted through the hook part 71 into power acting in the direction in which the slide member 34 slides and is then transferred to the slide member 34. Thus, the auxiliary pressurizing member 32 is rotated simultaneously with sliding of the slide member 34, the collision part 321 collides against the housing H, and then auxiliary power is applied to the door D. Accordingly, a magnetic force between the door D and the housing H may be overcome.

Furthermore, as described above, a latch mechanism is employed as the power conversion device 70 in accordance with the present embodiment. When the motor M makes reverse rotation to rotate the carrier 304 in a backward direction, the hook part 71 is away from a moving path of the rotation parts 72 and thus the rotation parts 72 are not coupled to the hook part 71. Accordingly, rotation of the carrier 304 is not interfered.

An operation of the door driving system 100 of the refrigerator in accordance with the present embodiment will be described below.

First, a case in which the door D which is at the closed position is moved in an opening direction will be described below.

First, when the motor M is driven by a control signal received from the controller, either the worm gear 47 which is an element of the driving gear 45 or the sun gear 301 is rotated. In this case, the locking member 402 is at the withdrawn position sp, the locking device 400 is in the unlocked state Sx, and the clutch device 101 is in the non-power transfer state Qx (see FIG. 7A).

In this state, when the sun gear 301 is rotated, the internal gear 303 is not rotated and the carrier 304 is rotated. Since the rotation parts 72 are rotated together with the carrier 304, one of the two rotation parts 72 comes in contact with the hook part 71 (see FIG. 7B). Thereafter, as the carrier 304 is continuously rotated, the rotation part 72 pressurizes the hook part 71. Thus, the slide member 34 slides and a magnetic force between the door D and the housing H may be overcome by auxiliary power.

After the magnetic force between the door D and the housing H is overcome, when the carrier 304 is continuously rotated and thus one of the dented parts 401 in the outer circumference surface of the carrier 304 reaches a position corresponding to the pressurizing member 403, the locking member 402 is wedged into one of the dented parts 401 due to pressure applied by the pressurizing member 403 and is thus moved from the withdrawn position sp to the locked position rp. Thus, the locking device 400 is switched from the unlocked state Sx to the locked state Rx and the clutch device 101 is switched from the non-power transfer state Qx to the power transfer state Px (see FIG. 7C).

When the locking device 400 is switched to the locked state Rx, the carrier 304 cannot be rotated. Thus, the carrier 304 is not rotated and the internal gear 303 is rotated by the rotation of the sun gear 301. Thus, the power of the motor M transferred to the sun gear 301 is output through the internal gear 303 and is then transferred to the hinge Z of the door D through the driving gears 45 or the missing-teeth gear 46 between the internal gear 303 and the hinge Z of the door D, thereby moving the door D in the opening direction.

Next, a case in which the door D which is in the opened state is moved in a closing direction will be described below.

First, when the motor M is driven by a control signal received from the controller, either the worm gear 47 which is an element of the driving gear 45 or the sun gear 301 is rotated. In this case, the locking member 402 is at the locked position rp, the locking device 400 is in the locked state Rx, and the clutch device 101 is in the non-power transfer state Qx (FIG. 7C).

In this state, the power of the motor M is transferred to the hinge Z of the door D through the driving gear 45 or the missing-teeth gear 46. Thus, the door D is moved in the closing direction and is finally moved to the closed position due to a magnetic force between the door D and the housing H. Since the internal gear 303 is locked in a state in which the door D is at the closed position, rotation of the sun gear 301 is transferred to the carrier 304. Furthermore, when the motor M is further instantaneously driven in the closing direction right after the door D is closed, the locking member 402 may overcome pressure applied by the pressurizing member 403 and thus be moved from the locked position rp to the withdrawn position sp. At the same time, the locking device 400 is switched from the locked state Rx to the unlocked state Sx.

Next, a case in which the door D is moved in the opening direction or the closing direction, i.e., a user tries to move the door D in a backward direction will be described below. In this case, the internal gear 303 is rotated in the backward direction while being linked with the door D, but the sun gear 301 is not rotated since the worm gear 47 is coupled to the output shaft of the motor M. Thus, the rotation of the internal gear 303 is transferred to the carrier 304, and the locking member 402 wedged into one of the dented parts 401 is moved from the locked position rp to the withdrawn position sp when a force which is greater than or equal to a predetermined level is applied to the carrier 304. Thus, the locking device 400 is switched from the locked state Rx to the unlocked state Sx and the clutch device 101 is switched from the power transfer state Px to the non-power transfer state Qx. Thus, the force applied to the door D by the user to move the door D in the backward direction is not transferred to the motor M. Accordingly, the motor M or these gears are prevented from being damaged.

Next, a case in which the door D is manually opened or closed will be described below.

When the door which is at the closed position is manually opened or closed, rotation of the internal gear 303 linked with the door D is transferred to the carrier 304 since the worm gear 47 is coupled to the output shaft of the motor M. In this case, the locking device 400 is in the unlocked state Sx, the clutch device 101 is in the non-power transfer state Qx, and thus the force applied to the door D by the user to move the door D is not transferred to the motor M. Accordingly, the user may easily move the door D.

In the door driving system 100 having the above structure of the refrigerator, the clutch device 101 is in the non-power transfer state Qx when the auxiliary device 30 generates auxiliary power and thus a magnetic force between the door D and the housing H in a state in which power of the motor M is not transferred to the hinge Z may be overcome. Thus, a torque needed to overcome the magnetic force between the door D and the housing H may be reduced.

Furthermore, the door driving system 100 of the refrigerator includes the planetary gear unit 300 serving as a speed reducer and may thus reduce the speed of rotation of the motor M through the gears of the planetary gear unit 300. Therefore, the number of spur gears to be arranged in a direction of a plane to reduce the speed of the rotation of the motor M may be reduced and thus the door driving system 100 for use in a refrigerator may be manufactured to be compact.

In the present embodiment, when a force which is greater than or equal to a predetermined level is applied to a carrier, an elastic force of a pressurizing member is appropriately determined to move a locking member from a locked position to a withdrawn position. Alternatively, in other examples that are not covered by the claimed invention, the locking member may be moved using a torque limiter from the locked position to the withdrawn position.

In the present embodiment, two rotation parts are arranged on a rear surface of the carrier. Alternatively, in other examples that are not covered by the claimed invention, one or three or more rotation parts may be arranged on the rear surface of the carrier.

Furthermore, in the present embodiment, a missing-teeth gear having teeth only in some arch-shaped sections thereof is installed at a hinge. Alternatively, in other examples that are not covered by the claimed invention, a gear having teeth in entire round sections thereof may be installed at the hinge.

In addition, a door driving system of the refrigerator has been described above in the present embodiment but in other examples, that are not covered by the claimed invention, the door driving system is applicable to various devices .

Although a few embodiments of the present invention have been shown and described, it would be appreciated by those skilled in the art that changes may be made in these embodiments without departing from the scope of the invention which is only defined by the claims.

## Claims

1. A refrigerator (R) comprising:
a hinge (Z);
a door (D) rotatably installed at a housing (H) of the refrigerator, whereby the door (D) can rotate via the hinge (Z) to open and close;
a door driving system (100) comprising a driving device (10) including a motor (M) to generate and output power for opening and closing the door (D), whereby the driving device (10) can transfer the power to the door (D), and an auxiliary device (30) to generate auxiliary power from the power output by the motor (M) to assist in opening the door (D), when the door (D) is at a closed position,
wherein the driving device (10) further comprises a power transfer device (40) to transfer the power generated by the motor (M) to the hinge (Z) to open and close the door (D), and
wherein the power transfer device (40) comprises a clutch device (101) to selectively transfer the power of the motor (M) to the hinge (Z) or the auxiliary device (30) by switching between a first power transmitting state (Px) for transmitting the power of the motor (M) to the hinge (Z) and a second power transmitting state (Qx) for not transmitting the power of the motor (M) to the hinge (Z) but transmitting the power to the auxiliary device (30);
the clutch device (101) comprises a planetary gear unit (300) comprising:
a sun gear (301) linked with the motor (M);
a planetary gear (302) linked with the sun gear (301);
an internal gear (303) linked with the planetary gear (302) and configured to transfer the power output by the motor (M) to the hinge (Z) in the first power transmitting state (Px) of the clutch device (101);
a carrier (304) linked with the planetary gear (302) and configured to transfer the power output by the motor (M) to the auxiliary device (30) in the second power transmitting state (Qx) of the clutch device (101); and
the refrigerator further comprises a locking device (400) to selectively put the carrier (304) in an unlocked state in which the carrier (304) is rotatable and in a locked state in which rotation of the carrier (304) is limited; and
**characterised in that**:
the sun gear (301), the planetary gear (302), the internal gear (303) and the carrier (304) cooperate together so that:
when the clutch device (101) is in the first power transmitting state (Px), the carrier (304) is in the locked state, the sun gear (301) is rotated by the power output by the motor (M), and the planetary gear (302) rotates about a rotation axis to transfer the power output by the motor (M) to the internal gear (303) to thereby move the hinge (Z) to automatically open or close the door (D), and
when the clutch device (101) is in the second power transmitting state (Qx), the carrier (304) is in the unlocked state, the sun gear (301) is rotated by the power output by the motor (M), and the planetary gear (302) revolves to transfer the power output by the motor (M) to the carrier (304) to thereby move the door (D) in the opening direction from the closed position.

2. The refrigerator (R) according to claim 1, wherein the internal gear (303) comprises internal teeth engaged with teeth of the planetary gear (302), and is rotated by the internal teeth when the planetary gear (302) is rotated about the rotation axis to transfer the power output by the motor (M) to the internal gear (303).

3. The refrigerator (R) according to claim 1, wherein the carrier (304) is engaged with teeth of the planetary gear (302) and is rotatable, and
the planetary gear (302) revolves when the carrier (304) is rotated in the unlocked state.

4. The refrigerator (R) according to claim 1, wherein the carrier (304) comprises a dented part (401) formed in an outer circumference surface thereof, and
the locking device (400) comprises:
a locking member (402) to be selectively wedged into the dented part (401) as the carrier (304) is rotated, and a pressurizing member (32) to pressurize the locking member (402) against an outer surface of the carrier (304).

5. The refrigerator (R) according to claim 1, wherein when the internal gear (303) is rotated by a turning force generated in the hinge (Z) and the carrier is in the unlocked state, the planetary gear (302) revolves and does not transmit the turning force to the motor (M).

6. The refrigerator (R) according to claim 1, wherein the auxiliary device (30) comprises:
a slide member (34) which is slidable,
a power conversion device (70) coupled to an end part of the slide member (34) and configured to cause the slide member (34) to slide as the carrier (304) is rotated from the power of the motor (M) being transferred to the carrier (304) with the carrier (304) being in the rotatable state, and
an auxiliary pressurizing member (32) coupled to another end part of the slide member (34) and, with the door (D) being closed, rotate, linked with the sliding of the slide member (34), to pressurize the door (D), to thereby move the door (D) in an opening direction.

7. The refrigerator (R) according to claim 6, wherein the carrier (304) comprises a rotation part (72) arranged above the carrier (304) and rotated together with the carrier (304), and
the power conversion device (70) comprises a hook part (71) to be selectively engaged with the rotation part (72) according to a direction of rotation of the carrier (304).

8. The refrigerator (R) according to claim 4, wherein the locking member (402) is provided to overcome pressure applied by the pressurizing member (32) and to be moved from a locked position to a withdrawn position when a turning force generated by the hinge (Z) applied to the carrier (304) is greater than or equal to a predetermined level in a state in which the locking member (402) is in the locked position.

9. The refrigerator (R) according to claim 1, wherein, when a turning force is generated by the hinge (Z), the planetary gear (302) is provided to sequentially transfer the turning force to the internal gear (303), the planetary gear (302), and the carrier (304) and not to transfer the turning force to the sun gear (301).

10. The refrigerator (R) according to claim 1, wherein, after the door (D) is moved in an opening direction by the auxiliary power generated by the auxiliary device (30), the locking device (400) puts the carrier (304) in the locked state from the unlocked state, thereby transferring the power output by the motor (M) to the hinge (Z) through the internal gear (303).

## Patentansprüche

1. Kühlschrank (R), umfassend:
ein Scharnier (Z);
eine Tür (D), die drehbar an einem Gehäuse (H) des Kühlschranks installiert ist, wobei sich die Tür (D) mittels des Scharniers (Z) zum Öffnen und Schließen drehen kann;
ein Türantriebssystem (100), umfassend eine Antriebsvorrichtung (10), die einen Motor (M) enthält, um Energie zum Öffnen und Schließen der Tür (D) zu erzeugen und abzugeben, wobei die Antriebsvorrichtung (10) die Energie auf die Tür (D) übertragen kann, und eine Hilfsvorrichtung (30), um eine Hilfsenergie aus der vom Motor (M) abgegebenen Energie zu erzeugen, um das Öffnen der Tür (D) zu unterstützen, wenn sich die Tür (D) in einer geschlossenen Position befindet,
wobei die Antriebsvorrichtung (10) ferner eine Energieübertragungsvorrichtung (40) umfasst, um die Energie, die durch den Motor (M) erzeugt wird, auf das Scharnier (Z) zu übertragen, um die Tür (D) zu öffnen und zu schließen, und
wobei die Energieübertragungsvorrichtung (40) eine Kupplungsvorrichtung (101) umfasst, um die Energie des Motors (M) selektiv auf das Scharnier (Z) oder die Hilfsvorrichtung (30) zu übertragen, indem zwischen einem ersten Energieübertragungszustand (Px) zum Übertragen der Energie des Motors (M) auf das Scharnier (Z) und einem zweiten Energieübertragungszustand (Qx) zum Nicht-Übertragen der Energie des Motors (M) auf das Scharnier (Z), sondern zum Übertragen der Energie auf die Hilfsvorrichtung (30) umgeschaltet wird;
die Kupplungsvorrichtung (101) ein Planetengetriebe (300) umfasst, umfassend:
ein Sonnenrad (301), das mit dem Motor (M) verbunden ist;
ein Planetenrad (302), das mit dem Sonnenrad (301) verbunden ist;
ein Hohlrad (303), das mit dem Planetenrad (302) verbunden und dazu konfiguriert ist, die vom Motor (M) abgegebene Energie auf das Scharnier (Z) im ersten Energieübertragungszustand (Px) der Kupplungsvorrichtung (101) zu übertragen;
einen Träger (304), der mit dem Planetenrad (302) verbunden und dazu konfiguriert ist, die von dem Motor (M) abgegebene Energie an die Hilfsvorrichtung (30) in dem zweiten Energieübertragungszustand (Qx) der Kupplungseinrichtung (101) zu übertragen; und
der Kühlschrank ferner eine Verriegelungsvorrichtung (400) umfasst, um den Träger (304) selektiv in einen entriegelten Zustand, in dem der Träger (304) drehbar ist, und in einen verriegelten Zustand zu versetzen, in dem eine Drehung des Trägers (304) begrenzt ist; und
**dadurch gekennzeichnet, dass**:
das Sonnenrad (301), das Planetenrad (302), das Hohlrad (303) und der Träger (304) zusammenwirken, so dass:
wenn sich die Kupplungsvorrichtung (101) in dem ersten Energieübertragungszustand (Px) befindet, der Träger (304) sich in dem verriegelten Zustand befindet, das Sonnenrad (301) durch die Energie, die von dem Motor (M) abgegeben wird, gedreht wird, und sich das Planetenrad (302) um eine Rotationsachse dreht, um die vom Motor (M) abgegebene Energie auf das Hohlrad (303) zu übertragen, um dadurch das Scharnier (Z) zu bewegen, um die Tür (D) automatisch zu öffnen oder zu schließen, und
wenn sich die Kupplungsvorrichtung (101) in dem zweiten Energieübertragungszustand (Qx) befindet, der Träger (304) sich in dem entriegelten Zustand befindet, das Sonnenrad (301) durch die Energie gedreht wird, die von dem Motor (M) abgegeben wird, und das Planetenrad (302) rotiert, um die vom Motor (M) abgegebene Energie auf den Träger (304) zu übertragen, um dadurch die Tür (D) aus der geschlossenen Position in die Öffnungsrichtung zu bewegen.

2. Kühlschrank (R) nach Anspruch 1, wobei das Hohlrad (303) Innenzähne umfasst, die mit Zähnen des Planetenrads (302) in Eingriff stehen, und durch die Innenzähne gedreht wird, wenn das Planetenrad (302) um die Rotationsachse gedreht wird, um die vom Motor (M) abgegebene Energie auf das Hohlrad (303) zu übertragen.

3. Kühlschrank (R) nach Anspruch 1, wobei der Träger (304) mit Zähnen des Planetenrads (302) in Eingriff steht und drehbar ist, und
das Planetenrad (302) rotiert, wenn der Träger (304) im entriegelten Zustand gedreht wird.

4. Kühlschrank (R) nach Anspruch 1, wobei der Träger (304) einen eingekerbten Teil (401) umfasst, der in einer äußeren Umfangsfläche davon ausgebildet ist, und
die Verriegelungsvorrichtung (400) umfasst:
ein Verriegelungselement (402), das selektiv in den eingekerbten Teil (401) eingekeilt wird, wenn der Träger (304) gedreht wird, und ein Druckbeaufschlagungselement (32), um das Verriegelungselement (402) gegen eine Außenfläche des Trägers (304) zu drücken.

5. Kühlschrank (R) nach Anspruch 1, wobei, wenn das Hohlrad (303) durch eine Drehkraft gedreht wird, die in dem Scharnier (Z) erzeugt wird, und sich der Träger in dem unverriegelten Zustand befindet, das Planetenrad (302) rotiert und die Drehkraft nicht auf den Motor (M) überträgt.

6. Kühlschrank (R) nach Anspruch 1, wobei die Hilfsvorrichtung (30) umfasst:
ein Gleitelement (34), das gleitbar ist,
eine Energieumwandlungsvorrichtung (70), die mit einem Endteil des Gleitelements (34) gekoppelt und dazu konfiguriert ist, zu bewirken, dass das Gleitelement (34) gleitet, wenn der Träger (304) dadurch gedreht wird, dass die Energie des Motors (M) an den Träger (304) übertragen wird, wobei sich der Träger (304) in dem drehbaren Zustand befindet, und
ein Hilfsdruckbeaufschlagungselement (32), das mit einem anderen Endteil des Gleitelements (34) gekoppelt ist und sich bei geschlossener Tür (D) in Verbindung mit dem Gleiten des Gleitelements (34) drehen, um die Tür (D) unter Druck zu setzen, um dadurch die Tür (D) in eine Öffnungsrichtung zu bewegen.

7. Kühlschrank (R) nach Anspruch 6, wobei der Träger (304) ein Drehteil (72) umfasst, das über dem Träger (304) angeordnet ist und zusammen mit dem Träger (304) gedreht wird, und
die Energieumwandlungsvorrichtung (70) ein Hakenteil (71) umfasst, das selektiv mit dem Drehteil (72) gemäß einer Drehrichtung des Trägers (304) in Eingriff zu bringen ist.

8. Kühlschrank (R) nach Anspruch 4, wobei das Verriegelungselement (402) dazu bereitgestellt ist, um den durch das Druckbeaufschlagungselement (32) aufgebrachten Druck zu überwinden und von einer verriegelten Position in eine zurückgezogene Position bewegt zu werden, wenn eine Drehkraft, die durch das Scharnier (Z) erzeugt wird und auf den Träger (304) aufgebracht wird, größer oder gleich einem vorbestimmten Niveau in einem Zustand ist, in dem sich das Verriegelungselement (402) in der verriegelten Position befindet.

9. Kühlschrank (R) nach Anspruch 1, wobei, wenn eine Drehkraft durch das Scharnier (Z) erzeugt wird, das Planetenrad (302) dazu bereitgestellt ist, um die Drehkraft nacheinander auf das Hohlrad (303), das Planetenrad (302) und den Träger (304) zu übertragen und die Drehkraft nicht auf das Sonnenrad (301) zu übertragen.

10. Kühlschrank (R) nach Anspruch 1, wobei, nachdem die Tür (D) durch die von der Hilfsvorrichtung (30) erzeugte Hilfsenergie in eine Öffnungsrichtung bewegt wird, die Verriegelungsvorrichtung (400) den Träger (304) in den verriegelten Zustand aus dem entriegelten Zustand versetzt, wodurch die vom Motor (M) abgegebene Energie auf das Scharnier (Z) über das Hohlrad (303) übertragen wird.

## Revendications

1. Réfrigérateur (R) comprenant :
une charnière (Z) ;
une porte (D) installée de manière rotative au niveau d'un logement (H) du réfrigérateur, moyennant quoi la porte (D) peut tourner par l'intermédiaire de la charnière (Z) pour s'ouvrir et se fermer ;
un système d'entraînement de porte (100) comprenant un dispositif d'entraînement (10) comprenant un moteur (M) pour générer et délivrer en sortie une puissance en vue de l'ouverture et de la fermeture de la porte (D), moyennant quoi le dispositif d'entraînement (10) peut transférer la puissance à la porte (D), et un dispositif auxiliaire (30) pour générer une puissance auxiliaire à partir de la puissance délivrée en sortie par le moteur (M) pour aider à ouvrir la porte (D), lorsque la porte (D) est dans une position fermée,
ledit dispositif d'entraînement (10) comprenant en outre un dispositif de transfert de puissance (40) pour transférer la puissance générée par le moteur (M) à la charnière (Z) afin d'ouvrir et de fermer la porte (D), et
ledit dispositif de transfert de puissance (40) comprenant un dispositif d'embrayage (101) pour transférer sélectivement la puissance du moteur (M) à la charnière (Z) ou au dispositif auxiliaire (30) en commutant entre un premier état de transmission de puissance (Px) en vue de la transmission de la puissance du moteur (M) à la charnière (Z) et un second état de transmission de puissance (Qx) en vue de la non transmission de la puissance du moteur (M) à la charnière (Z) mais la transmission de la puissance au dispositif auxiliaire (30) ;
le dispositif d'embrayage (101) comprend une unité de train épicycloïdal (300) comprenant :
un planétaire (301) lié au moteur (M) ;
un satellite (302) lié au planétaire (301) ;
une roue dentée interne (303) liée au satellite (302) et conçue pour transférer la puissance délivrée en sortie par le moteur (M) à la charnière (Z) dans le premier état de transmission de puissance (Px) du dispositif d'embrayage (101) ;
un support (304) lié au satellite (302) et conçu pour transférer la puissance délivrée en sortie par le moteur (M) au dispositif auxiliaire (30) dans le second état de transmission de puissance (Qx) du dispositif d'embrayage (101) ; et
le réfrigérateur comprend en outre un dispositif de verrouillage (400) pour mettre sélectivement le support (304) dans un état déverrouillé dans lequel le support (304) est rotatif et dans un état verrouillé dans lequel la rotation du support (304) est limitée ; et **caractérisé en ce que** :
le planétaire (301), le satellite (302), la roue dentée interne (303) et le support (304) coopèrent ensemble de sorte que :
lorsque le dispositif d'embrayage (101) est dans le premier état de transmission de puissance (Px), le support (304) soit dans l'état verrouillé, le planétaire (301) soit entraîné en rotation par la puissance délivrée en sortie par le moteur (M), et le satellite (302) tourne autour d'un axe de rotation pour transférer la puissance délivrée en sortie par le moteur (M) à la roue dentée interne (303) pour ainsi déplacer la charnière (Z) afin d'ouvrir ou de fermer automatiquement la porte (D), et
lorsque le dispositif d'embrayage (101) est dans le second état de transmission de puissance (Qx), le support (304) soit dans l'état déverrouillé, le planétaire (301) soit entraîné en rotation par la puissance délivrée en sortie par le moteur (M), et le satellite (302) tourne pour transférer la puissance délivrée en sortie par le moteur (M) au support (304) pour ainsi déplacer la porte (D) dans la direction d'ouverture à partir de la position fermée.

2. Réfrigérateur (R) selon la revendication 1, ladite roue dentée interne (303) comprenant des dents internes en prise avec les dents du satellite (302), et étant entraînée en rotation par les dents internes lorsque le satellite (302) est entraîné en rotation autour de l'axe rotation pour transférer la puissance délivrée en sortie par le moteur (M) à la roue dentée interne (303).

3. Réfrigérateur (R) selon la revendication 1, ledit support (304) étant en prise avec les dents du satellite (302) et pouvant tourner, et
ledit satellite (302) tournant lorsque le support (304) est entraîné en rotation dans l'état déverrouillé.

4. Réfrigérateur (R) selon la revendication 1, ledit support (304) comprenant une partie bosselée (401) formée dans une surface de circonférence externe de celui-ci, et
ledit dispositif de verrouillage (400) comprenant :
un élément de verrouillage (402) à caler sélectivement dans la partie bosselée (401) tandis que le support (304) est entraîné en rotation, et un élément de mise sous pression (32) pour presser l'élément de verrouillage (402) contre une surface externe du support (304).

5. Réfrigérateur (R) selon la revendication 1, lorsque la roue dentée interne (303) est entraînée en rotation par une force de rotation générée dans la charnière (Z) et que le support est dans l'état déverrouillé, ledit satellite (302) tournant et ne transmettant pas la force de rotation au moteur (M).

6. Réfrigérateur (R) selon la revendication 1, ledit dispositif auxiliaire (30) comprenant :
un élément coulissant (34) qui peut coulisser,
un dispositif de conversion de puissance (70) couplé à une partie d'extrémité de l'élément coulissant (34) et conçu pour amener l'élément coulissant (34) à coulisser tandis que le support (304) est entraîné en rotation à partir de la puissance du moteur (M) qui est transférée au support (304), le support (304) étant dans l'état rotatif, et
un élément de mise sous pression auxiliaire (32) couplé à une autre partie d'extrémité de l'élément coulissant (34) et, la porte (D) étant fermée, tourne, lié au coulissement de l'élément coulissant (34), pour presser la porte (D), pour ainsi déplacer la porte (D) dans une direction d'ouverture.

7. Réfrigérateur (R) selon la revendication 6, ledit support (304) comprenant une partie rotation (72) agencée au-dessus du support (304) et entraînée en rotation avec le support (304), et
ledit dispositif de conversion de puissance (70) comprenant une partie crochet (71) destinée à être en prise sélectivement avec la partie rotation (72) selon un sens de rotation du support (304).

8. Réfrigérateur (R) selon la revendication 4, ledit élément de verrouillage (402) étant prévu pour vaincre la pression appliquée par l'élément de mise sous pression (32) et pour être déplacé d'une position verrouillée à une position retirée lorsqu'une force de rotation générée par la charnière (Z) appliquée au support (304) est supérieure ou égale à un niveau prédéfini dans un état dans lequel l'élément de verrouillage (402) est dans la position verrouillée.

9. Réfrigérateur (R) selon la revendication 1, lorsqu'une force de rotation est générée par la charnière (Z), le satellite (302) étant prévu pour transférer séquentiellement la force de rotation à la roue dentée interne (303), le satellite (302) et le support (304) et ne pas transférer la force de rotation au planétaire (301).

10. Réfrigérateur (R) selon la revendication 1, après que la porte (D) a été déplacée dans une direction d'ouverture par la puissance auxiliaire générée par le dispositif auxiliaire (30), ledit dispositif de verrouillage (400) plaçant le support (304) dans l'état verrouillé à partir de l'état déverrouillé, transférant ainsi la puissance délivrée en sortie par le moteur (M) à la charnière (Z) par l'intermédiaire de la roue dentée interne (303).
